# EUROPÄISCHE PATENTSCHRIFT

(11) **EP 0 616 884 B1**
(45) Veröffentlichungstag und Bekanntmachung des Hinweises auf die Patenterteilung: **25.09.1996**
(21) Anmeldenummer: 94103084.3
(22) Anmeldetag: 02.03.1994
(51) Int. Cl.: B32B 18/00, B32B 15/00, C04B 37/02, C04B 35/536

(54) **Verfahren zur Herstellung eines Schichtstoffes aus Metall und Graphit**
Method of making a layered metal and graphite product
Procédé de fabrication d'un produit laminé en métal et graphite

(30) Priorität: 25.03.1993 DE 4309700
(43) Veröffentlichungstag der Anmeldung: 28.09.1994
(73) Patentinhaber: SGL TECHNIK GMBH, D-86405 Meitingen (DE)
(72) Erfinder: Hirschvogel, Alfred, D-86462 Achsheim (DE)

(56) Entgegenhaltungen:
- EP-A- 0 052 485
- US-A- 4 234 638

## Beschreibung

Die Erfindung betrifft ein Verfahren zur Herstellung eines Schichtstoffes aus mindestens einer Lage eines Metalls und mindestens einer Lage Graphit, bei dem eine ganzflächige, unlösbare Verbindung zwischen dem Metall und dem Graphit vorliegt und bei dem ein Graphit verwendet wird, der durch Verpressen von expandiertem Graphit hergestellt wird.

Schichtstoffe aus Metallplatten oder -Blechen und aus aus wurmförmigem oder expandiertem Graphit durch Verdichten hergestellten Platten oder Folien aus Graphit sind bekannt (U.S. 3,404,061; DE-OS 25 18 351; US 4,422,894; Firmenprospekt® SIGRAFLEX der SIGRI GmbH). Sie werden vor allem für Flachdichtungen, als Ofeneinbauten, Strahlungsschilde, Abscheidungsplatten in Elektrofiltern und für korrosionsbeständige Auskleidungen verwendet.

Hauptsächlicher Grund für die Entwicklung derartiger Schichtstoffe war die vergleichsweise geringe Belastbarkeit der durch Verpressen expandierten Graphits hergestellten Graphitfolien oder -Platten gegenüber Zug- und Biegekräften. Bei der Handhabung im rauhen Betriebsalltag führte diese geringe Belastbarkeit häufig zu Beschädigungen der unverstärkten Graphitteile, wodurch die Verwendbarkeit der sonst hervorragende thermische, elektrische und chemische Eigenschaften aufweisenden Produkte dieses Typs eingeschränkt wurde.

Anordnung und Abfolge der einzelnen Lagen in derartigen Schichtstoffen sind weitgehend frei wählbar und richten sich nach dem vorgesehenen Anwendungszweck. In den meisten Fällen ist der Graphit ein- oder beidseitig auf die Metallage aufgebracht.

Nach der Art der Haftung zwischen Graphit- und Metalllage können zwei Arten derartiger Schichtstoffe unterschieden werden. Im ersten Fall ist die Haftung mechanischer Art. Der metallische Teil hat Oberflächenstrukturen, die beim Verpressen des Graphits mit dem Metallteil entweder in den Graphit eindringen oder in die der Graphit durch Fließprozesse eindringt.

Beispiele hierfür sind Spießbleche, Bleche mit nicht entgrateten Bohrungen, Drahtgewebe, Sintermetalle, bzw. Metalloberflächen mit porigen, rauhen oder verletzten Oberflächen wie z.B. Oberflächen von Dichtungsflanschen. Ein derartiges, häufig unerwünschtes Verkleben der Flachdichtungen mit den Gegenflächen, zwischen denen die Dichtung eingespannt ist, ist z.B. in DE 32 44 595 (Sp. 2, Z. 14 bis 28) und in DE-OS 37 19 484 (Sp. 1, Z. 68 bis Sp. 2, Z. 1 bis 8) angegeben. Diese Art von Verklebungen, die nicht reproduzierbar und nicht gleichmäßig über die sich berührenden Flächen verteilt auftreten, werden nur nach langem Gebrauch von unter Dichtungsbedingungen zusammengespannten Flächen beobachtet und können deshalb nicht als Grundlage für die Herstellung von Schichtstoffen aus Metall und Graphitlagen der hier beschriebenen Art verwendet werden.

Im zweiten Fall werden die Metall- und die Graphitoberflächen mittels organischer oder anorganischer Kleber kraftschlüssig miteinander verbunden. Dieses Verfahren wird bevorzugt bei Vorliegen sehr glatter Metalloberflächen und/oder dann verwendet, wenn die Oberflächen nicht mit mechanisch wirkenden Verankerungselementen versehen werden können.

Alle Verbindungen des ersten und des zweiten Typs haben Nachteile, die die Verwendbarkeit der Schichtkörper einschränken oder die Ursache für Beschädigungen der Schichtkörper sind.

Für die Ausbildung einer mechanisch wirkenden Verbindung sind bei der Fertigung des Schichtstoffs bereits relativ hohe Flächenpressungen erforderlich. Demgemäß können z.B. aus derartigem Material hergestellte Dichtungen für Dichtungsaufgaben, bei denen nur niedrige Spannkräfte auf die Dichtungsflächen aufgegeben werden dürfen, nicht verwendet werden. Desweiteren führt das Eingreifen oder Einbringen von Zacken oder Erhebungen der Metallverstärkung in den Graphit oder das Gleiten von Graphitmaterial in Vertiefungen der Metallverstärkung oder in Vertiefungen der Gegenflächen einer Dichtung zu partiellen Inhomogenitäten und Schwächungen der Graphitauflage. Bei Dichtungen führt dies zu Inhomogenitäten in der Verteilung der Flächenpressung und damit der Dichtwirkung, bei Anwendungen als Coating gegenüber aggressiven Medien zu einer Verringerung der wirksamen Schichtstärke und bei Anwendungen unter hohen Temperaturen zu ungleichmäßiger Erwärmung bzw. Wärmeabführung und infolgedessen zu Verspannungen und Verwerfungen mit der Folge von partiellen Ablösungen. Ablösungen sind bei diesem Verbindungstyp insbesondere bei der Manipulation von Schichtstoffteilen häufig nicht zu vermeiden. Dies ist besonders bei dünnen und damit biegbaren Schichtstoffen oder bei schmalen Teilen aus solchen Schichtstoffen der Fall. Derartige Vorkommnisse führen häufig zur Unbrauchbarkeit des Teils oder beim Auftreten im laufenden Betrieb zu Betriebsstörungen.

Bei mit Spießblechen verstärkten Dichtungen kann es außerdem unter Belastung auch zum Reißen der metallischen Verstärkungsplatte kommen. Ausgelöst wird ein solcher Schaden durch Spannungsspitzen, die sich in den Ecken der Löcher bilden, die durch das Herausbiegen der Spieße aus den Blechen entstanden sind. Auch deshalb ist ein Bedarf zur Herstellung von kleberfreien Verbundkörpern aus Metall- und Graphitlagen, die die Nachteile von Spießblechverstärkungen nicht haben, vorhanden.

Die Verwendung von die Verbindung zwischen Metall- und Graphitlage(n) herstellenden Klebern hat andere Nachteile. Kleber der bisher für die Herstellung gattungsgemäßer Schichtstoffe bekannten Art werden in Schichtstärken von mindestens mehreren *µ*m aufgetragen. Das bedeutet, daß sich zwischen Metallage und Graphitlage eine Klebstofflage befindet, deren Masse zusätzlich zur Klebung bestimmte Wirkungen hervorruft, die beachtet werden müssen. Schichtstoffe dieser Art können nur bis höchstens zur Zersetzungstemperatur des Klebstoffs eingesetzt werden. Andernfalls sind die Gebrauchsfähigkeit verhindernde oder herabsetzende Schäden wie Ablösungen der Graphitauflage oder Blasenbildung an der Graphitauflage die Folge. Desweiteren ist das Austreten von Zersetzungsprodukten des Klebers in die Apparaturen oder die Umgebung häufig nicht tolerierbar. Selbst wenn das Schichtstoffteil eingespannt ist und deshalb Ablösungen der Lagen nicht zu befürchten sind, wie dies bei Flachdichtungen der Fall ist, führt die Zersetzung des Klebers wegen der mit der Zersetzung einhergehenden Volumenverminderung zu einer Reduzierung der Dichtwirkung durch Senkung der Schraubenvorspannung. Ein anderer Schädigungsmechanismus setzt bei Flachdichtungen ein, wenn Kleberschichten durch thermische oder chemische Einwirkung erweichen. Die unter Druckspannung stehenden Graphitschichten beginnen dann bereits bei relativ niedrigen Flächenpressungen seitlich abzugleiten, was im Extremfall zum Zerreißen der Dichtung führt. In jedem Fall wird aber die Dichtwirkung wegen der mit den Gleitvorgängen verbundenen Verringerung der Schraubenvorspannung herabgesetzt. Ein Nachspannen der Schrauben kann diesen Mangel dann nicht ausgleichen, weil dann die Fließprozesse weitergehen. Schließlich müssen bei Anwendungen wie z.B. bei Filterplatten in Elektrofiltern, bei denen auch eine gute elektrische Leitfähigkeit senkrecht zur Oberfläche des Schichtstoffs gefordert ist, teure Leitkleber verwendet werden. Ablösungen im Klebersystem, die durch chemische Einwirkungen oder durch Schwingungen verursacht werden können, führen hier mindestens zu einer drastischen Verringerung des Wirkungsgrades.

Der Erfindung lag deshalb die Aufgabe zugrunde, ein Verfahren zur Herstellung eines Schichtstoffs aus mindestens einer Lage eines Metalls und mindestens einer Lage eines durch Verpressen von expandiertem Graphit hergestellten Graphits zu schaffen, mit dem ohne Verwendung von mechanisch wirkenden Verankerungstechniken und ohne Verwendung bekannter Klebstoffe eine temperaturbeständige, unlösbare, sich über den ganzen Bereich der miteinander zu verbindenden Metall- und Graphitflächen wirksame Verbindung hergestellt werden kann. Insbesondere soll nach dem Verfahren ein gattungsgemäßer Schichtstoff herstellbar sein, der die beschriebenen Nachteile von Schichtstoffen nach dem Stand der Technik nicht hat und bei dem die Verbindung zwischen Metallage(n) und Graphitlage(n) sowohl unter thermischen als auch unter mechanischen Beanspruchungen, wie Biegung oder Druckspannungen, unlösbar ist, d.h. daß die Festigkeit der Metall-Graphitverbindung über die Erstreckung des ganzen Schichtstoffs flächendeckend größer als die Eigenfestigkeit des Graphits ist.

Die Aufgabe wird durch die kombination der Merkmale der Patentansprüche 1 oder 2 gelöst. Die darauf folgenden Ansprüche sind Ausgestaltungen der Ansprüche 1 und 2.

Der zum Verbinden mit dem Metall verwendete Graphit wird in an sich bekannter Weise durch thermisches Expandieren von Graphiteinlagerungsverbindungen zu sogenanntem expandierten Graphit und nachfolgendes Verdichten des expandierten Graphits ohne Binderzusatz zu flexiblen Folien oder zu Platten hergestellt (US 3,404,061; DE 26 08 866 ≙ US 4,091,083).

Im folgenden wird zur Bezeichnung dieses Produkts aus Gründen der Vereinfachung nur mehr die Bezeichnung "Graphit" verwendet.

Bei der Lösung der Aufgabe wurde nach die Haftung zwischen Metall und "Graphit" vermittelnden Substanzen gesucht, die gleichmäßig und extrem dünn auf die Oberflächen der beiden Materialien aufbringbar sind. Hydro- und oleophobierende Substanzen lassen sich in bekannter Weise in sehr dünnen Überzügen auf Oberflächen, speziell auf textile Oberflächen aber wie die Versuche zeigten, auch auf Metalle und auf "Graphit" aufbringen. Überraschenderweise wurde nun gefunden, daß diese Substanzen auch als ausgezeichnete Haftvermittler zwischen Metalloberflächen und "Graphit" wirken, wenn die zu verbindenden Oberflächen eine gewisse Zeit lang bei erhöhter Temperatur zusammengepreßt werden. Diese haftvermittelnde Wirkung wird auch dann noch entfaltet, wenn diese Substanzen in so geringer Menge aufgetragen werden, daß wenigstens eine der zu verbindenden Oberflächen gerade damit bedeckt werden kann.

Es ist wesentlich für die Erfindung, daß die jeweilige haftvermittelnde Substanz in möglichst geringer Menge, d.h. in im nm-Bereich liegenden Stärken aufgetragen wird. Die verwendeten erfindungsgemäßen Substanzen wirken offensichtlich selektiv haftvermittelnd auf die Materialpaarung Metall "Graphit". Andere Stoffe als "Graphit" wie Metalle, Gummi, Kunststoffe, Holz ließen sich damit nicht fest mit einer Metallunterlage verbinden. Die Haftvermittlung folgt hier also nicht den bei üblichen Klebstoffen bekannten Verbindungsmechanismen. Dies folgt auch aus der Tatsache, daß bei mehreren der hergestellten Schichtstoffe die Verbindungsfestigkeit zwischen Metall und "Graphit" auch oberhalb der Zersetzungstemperatur der Haftvermittler bestehen bleibt. Nachteile der oben beschriebenen Art treten nicht mehr auf. Bei Biegungen des Schichtstoffs werden Delaminierungen der "Graphit"-Auflage nicht beobachtet. Der Werkstoff kann bis zur Eigenfestigkeit des "Graphits" druckbelastet werden. Gleitbewegungen des "Graphits" auf der metallischen Unterlage finden nicht mehr statt.

Die erfindungsgemäß verwendbaren Haftvermittler sind grenzflächenaktive Substanzen aus der Gruppe der siliciumorganischen Verbindungen, vorzugsweise der Silicone, der perfluorierten Verbindungen und der Metallseifen, die an sich wohlbekannt sind und als Hydrophobierungs-, Antischaum- oder Weichgriffmittel in der Technik, z.B. in der Ausrüstung von Textilien verwendet werden (P. Hardt, Silicon-Textilhilfsmittel, Textilveredelung 19 (1984), S. 143 bis 146; Ullmanns Encyklopädie der technischen Chemie, 3. Auflage 1966, Bd. 17, S. 203 bis 206). Von den Siliconen werden insbesondere Polysiloxane aus der Gruppe Dimethyl-polysiloxane, Methyl-hydrogen-polysiloxane, (Methyl-polyalkylenoxid)-dimethyl-polysiloxane, Amino-modifizierte-methyl-polysiloxane, α - ω - Dihydroxi-dimethyl-polysiloxane, α - ω -Divinyl-dimethyl-polysiloxane, α - ω - Dihydroxi-(methyl-alkylamino)-dimethyl-polysiloxane verwendet. Aus der Gruppe der grenzflächenaktiven perfluorierten Verbindungen haben sich besonders Perfluorcarbonsäuren und perfluorierte Verbindungen der allgemeinen Formel F₃C-(CF₂)ₙ-R mit R = Polyurethan, Polyacrylat, Polymethacrylat und n = 6-12 als günstig erwiesen. Keiner der genannten Stoffe darf Klebstoffcharakter haben, da sonst die Wirkungsweise der Erfindung nicht mehr gewährleistet wäre und im Vorstehenden beschriebene Nachteile wieder wirksam werden. Die Wirkung der genannten grenzflächenaktiven Substanzen kann verbessert werden, indem in sie entweder vor ihrem Auftragen auf die Oberflächen des Metalls und/oder des "Graphits" oder nach diesem Vorgang mindestens ein hydrolysierbares Salz aus der Gruppe der Metalle, Aluminium, Zirkon, Titan, Zinn, Zink, Chrom in molekularer Form eingelagert wird. Dies geschieht entweder durch Vermischen der entsprechenden Komponenten miteinander im gewünschten Verhältnis vor dem Auftragen oder nach dem Auftragen der ersten aus einem Siloxan und/oder einer perfluorierten Verbindung und/oder einer Metallseife bestehenden Komponente auf eine oder beide der zu verbindenden Oberflächen auf die bereits aufgetragene Schicht durch ein geeignetes Auftragsverfahren. Um die notwendige feine Verteilung zu erreichen, wird hierbei häufig mit Emulsionen, Dispersionen oder Lösungen gearbeitet. Die aufgetragenen hydrolysierbaren Salze verteilen sich dann in der ersten Schicht durch Diffusion in molekularer Form. Bevorzugt werden als hydrolysierbare Salze Fettsäuresalze der genannten Metalle zugesetzt. Sie wirken außerdem vernetzend auf die grenzflächenaktiven Verbindungen und fördern deren Fixierung auf den Oberflächen, auf die sie aufgebracht wurden. Als Vernetzungshilfe kann vorteilhafterweise auch ein Epoxidamin eingesetzt werden.

Die angegebenen grenzflächenaktiven Substanzen können, unabhängig von der Stoffklasse, der sie angehören, allein oder in Mischungen untereinander angewendet werden, wobei Mischungen aus mehr als zwei der grenzflächenaktiven Substanzen zwar möglich, aber aus praktischen Gründen unüblich sind. Vorteilhaft sind z.B. Mischungen aus Methyl-hydrogen-polysiloxan und (Methyl-polyalkylenoxid)-dimethyl-polysiloxan, Mischungen aus Methyl-hydrogen-polysiloxan und α - ω - Dihydroxi-dimethyl-polysiloxan und Mischungen aus aminomodifiziertem Methyl-polysiloxan und α - ω - Dihydroxi-dimethyl-polysiloxan. Als besonders vorteilhaft hat sich eine Mischung von Methyl-hydrogen-polysiloxan und Dimethyl-polysiloxan im ungefähren Gewichtsverhältnis von 1:1 erwiesen, die bevorzugt in Form einer wässerigen Emulsion verarbeitet wird.

Falls es Schwierigkeiten bereitet, die grenzflächenaktive Substanz oder eine Mischung derartiger Substanzen gleichmäßig auf die Metall- oder "Graphit"-Oberflächen aufzubringen, empfiehlt sich der Zusatz eines Benetzungshilfsmittels wie z.B. eines Alkylsulfonats oder einer Aufbereitung aus einem Fettalkohol und einem Etheralkohol zur aufzutragenden Flüssigkeit.

Die metallische Komponente des Schichtstoffs besteht insbesondere aus Eisen, Stahl, Edelstahl, Kupfer, Aluminium, Zink, Nickel, Titan oder aus Legierungen des Kupfers, Aluminiums, oder Zinks. Welches der Metalle oder welche der Legierungen verwendet wird, hängt vom vorgesehenen Verwendungszweck des Schichtstoffs ab. Die Metalle und Legierungen können in Form dünner Folien, von Blechen, Platten oder Blöcken vorliegen und die Metalloberflächen können plan oder wie in Rohren oder Behältern, gebogen sein. Vor ihrer Verarbeitung zum Schichtstoff müssen die zum Fügen mit dem "Graphit" bestimmten metallischen Oberflächen gesäubert werden. Weitere Oberflächenbehandlungen sind nicht erforderlich.

Die Komponenten des Schichtstoffs können in allen möglichen Anordnungen kombiniert werden. Der metallische Teil, der vorzugsweise in Form von Folien oder flächigen Teilen mit Stärken von zehntel Millimetern bis wenigen Zentimetern vorliegt, kann einseitig oder beidseitig mit "Graphit" beschichtet werden. Es können auch Körper aus einer wechselnden Folge von Metall- und "Graphit"-Lagen hergestellt werden. Die derartige Körper nach oben und unten begrenzenden Flächen können dabei entweder, was vorzugsweise der Fall ist, aus "Graphit" oder, seltener, aus Metall bestehen oder es befindet sich auf einer Seite eine Metall- und auf der anderen Seite eine "Graphit"-Lage.

Das Auftragen der grenzflächenaktiven Substanz kann auf eine oder auf beide der zu verbindenden Oberflächen vorgenommen werden. In aller Regel wird nur die metallische Oberfläche der Paarung benetzt, da dadurch die Menge an verwendeter grenzflächenaktiver Substanz weiter verringert werden kann. Es kann jedoch in gleicher Weise nur die entsprechende Oberfläche der "Graphit"-Lage benetzt werden.

Beim Auftragen der grenzflächenaktiven Substanzen auf die zu verbindenden Oberflächen muß es stets das Ziel sein, möglichst wenig dieser Substanzen, diese Menge aber möglichst gleichmäßig aufzubringen. Man arbeitet deshalb bei der üblichen Verfahrensweise nur selten mit reinen Substanzen. Diese werden in der Regel nur dann verwendet, wenn sie niedrigviskos genug sind. Üblicherweise werden Lösungen oder Emulsionen, bzw. Dispersionen angewandt, wobei beim Arbeiten im größeren Maßstab wässerige Emulsionen bevorzugt werden. Durch Wahl entsprechender Verdünnungsgrade, eventuell in Verbindung mit dem Zusatz geringer Mengen an Benetzungshilfsmitteln, können so z.B. durch Aufstreichen, mit Hilfe von Auftragsrollen, durch Sprühen, jeweils in Verbindung mit nachfolgendem Abstreifen oder andere, an sich bekannte Verfahren äußerst dünne Auflagen an grenzflächenwirksamen Substanzen aufgebracht werden. Die Schichtstärke beträgt bei den üblichen Anwendungen nicht mehr als 1000 nm. Sie soll nicht geringer als 10 nm sein. Bevorzugt wird mit Schichtstärken von 100 bis 500 nm gearbeitet. Es ist nicht notwendig, daß zusammenhängende Filme aus grenzflächenaktiven Substanzen erzeugt werden. Eine gleichmäßig verteilte dichte Auflage feinster Tröpfchen erfüllt auch den erfindungsgemäßen Zweck. Ein Abstreifen überschüssiger Flüssigkeit nach dem ersten Auftragevorgang empfiehlt sich aber auch hier.

Die Beschaffenheit der "Graphit"-Lage richtet sich nach dem für den Schichtstoff vorgesehenen Verwendungszweck. Im allgemeinen werden Lagen mit Stärken zwischen 0,1 bis 10 mm, vorzugsweise von 0,2 bis 2 mm verwendet. Die Rohdichte der aufzubringenden "Graphit"-Lagen liegt üblicherweise im Bereich von 0,01 bis 1,8 g/cm³, vorzugsweise von 0,5 bis 1,2 g/cm³. Es ist allerdings auch möglich, in einer die Metallage umgebenden, passenden Form expandierten Graphit auf die zuvor mit Adhäsionsvermittler versehene metallische Oberfläche aufzugeben (Rohdichte ca. 0,002 g/cm³) und diesen expandierten Graphit dann in dieser Form zu der gewünschten "Graphit"-Lage zu verdichten. Auf diese Weise können sehr dünne "Graphit"-Lagen aufgebracht werden. Gegebenenfalls kann auf eine so erzeugte "Graphit"-Lage noch eine weitere "Graphit"-Lage, z.B. in Folien- oder Plattenform aufgepreßt werden, die sich dann fest mit der darunter liegenden Lage verbindet, wenn diese zuvor nicht zu hoch verdichtet worden war.

Die auf die Metallagen vor dem Verpressen aufgebrachten "Graphit"-Lagen können bereits die Rohdichte haben, die für sie im fertigen Schichtstoff vorgesehen ist. Der beim Zusammenpressen der Lagen aus Metall und "Graphit" zur Herstellung des Schichtstoffs aufgewendete Preßdruck darf dann nicht den zum Erzielen der gegebenen Rohdichte der "Graphit"-Lage erforderlichen Verdichtungsdruck übersteigen. Es können aber auch zunächst Graphitlagen mit einer niedrigeren Rohdichte als der Endrohdichte im fertig verpreßten Schichtstoff aufgebracht werden. Die vorgesehene Endrohdichte wird dann erst beim Zusammenpressen der Komponenten des Schichtstoffs erzeugt.

Nach dem Zusammenfügen der den Schichtstoff bildenden Komponenten wird die angestrebte unlösbare Verbindung der Metall- und "Graphit"-Lage(n) durch Zusammenpressen hergestellt. Das Zusammenpressen kann mit Hilfe jeder der bekannten und dafür geeigneten Preßvorrichtungen geschehen. Vorzugsweise werden jedoch Gesenk- oder Etagenpressen, die heizbar sein sollten, verwendet.

Bei der Ausbildung der unlösbaren Verbindung wirken die Verfahrensparameter Preßdruck, Temperatur und Zeit zusammen. Die gewünschte Verbindungsfestigkeit wird z.B. erreicht, wenn bei vergleichsweise niedrigen Temperaturen von ca. 30 bis 50 °C sehr lange Zeit, d.h. in der Größenordnung von Tagen unter Einwirkung vergleichsweise hoher Drücke zusammengepreßt wird. Durch eine Erhöhung der Preßtemperatur kann die erforderliche Preßzeit indessen stark gesenkt werden. Hohe Preßdrücke bewirken ebenfalls eine Verkürzung der Preßzeit. Für ein wirtschaftliches Arbeiten werden Anpreßdrücke von 1 bis 50 MPa, vorzugsweise von 3 bis 10 MPa unter Anwendung von Temperaturen von 80 bis 300 °C, vorzugsweise von 120 bis 200 °C angewendet. Beim Arbeiten innerhalb des letztgenannten Parameterbereichs werden bei entsprechender Parameteroptimierung, die der Fachmann unschwer anhand der gemachten Angaben durch entsprechende Versuche vornimmt, Preßzeiten zwischen 5 Minuten und 5 Stunden, vorzugsweise von einer bis zwei Stunden benötigt.

Die nach der Druckentlastung und Abkühlung auf Raumtemperatur erhaltenen Schichtstoffe weisen eine unlösbare Verbindung zwischen der jeweils betrachteten Metall- und der dieser zugeordneten "Graphit"-Lage auf. Bei Versuchen, die "Graphit"-Lage von der Metallage zu lösen, z.B. durch Verbiegen oder durch Anwendung des Schältests oder eines Abreißtests, tritt immer ein Reißen innerhalb der Graphitlage und nicht an der Verbindungszone Metall-"Graphit" ein, d.h. die Festigkeit der erfindungsgemäß erzeugten Verbindung zwischen den Lagen des Schichtstoffs ist größer als die innere Festigkeit der "Graphit"-Lage(n).

Erfindungsgemäße Schichtstoffe sind, mechanische Verletzungen der vergleichsweise weichen Graphitoberflächen ausgenommen, handhabungsstabil. Auch bei dünnen Schichtstoffen dieses Typs treten keine Ablösungen auf, wenn Sie gebogen werden. Die äußere "Graphit"-Lage der Schichtstoffe kann oberflächenbehandelt werden, z.B. durch galvanisches Aufbringen von Metallen, durch thermische Prozesse oder Imprägnierungen mit Furanharz gemäß DE 32 44 595, ohne daß die Festigkeit der Verbindung der Lagen des Schichtstoffes leidet. Die Verbindungsfestigkeit bleibt auch bei Einwirkung aller den metallischen Teil des Schichtstoffs nicht angreifenden chemischen Substanzen bestehen. Bei der Anwendung als Flachdichtungen sind erfindungsgemäße Schichtstoffe druckfester und hitzebeständiger als herkömmliche geklebte Metall-"Graphit"-Dichtungen. Sie sind außerdem stabil gegen Delaminierungen des "Graphit"-Teils.

Die Erfindung wird im folgenden beispielhaft durch Ausführungsbeispiele erläutert.

### Beispiel 1:

Ein Stahlblech, Werkstoff Nr. 1.4401, Abmessungen 100 x 100 x 0,05 mm, wurde durch Abwischen mit einem Tuch gereinigt und dann mit einer grenzflächenaktiven Zubereitung folgender Zusammensetzung beschichtet: Wässerige Emulsion aus Methyl-hydrogen-polysiloxan und Dimethyl-polysiloxan (Feststoffgehalt ca. 25 Gew.-%) in Mischung mit einer oberflächenaktiven Zubereitung aus ethoxyliertem Fettalkohol und araliphatischem Etheralkohol im Volumenverhältnis 1:1. Die verwendete Siloxanemulsion ist unter der Produktbezeichnung BC (neu) von der Fa. Pfersee Chemie, D-8901 Langweid/Lech, die Fettalkohol/Etheralkoholzubereitung unter der Produktbezeichnung Invadin PBN von der gleichen Firma beziehbar. Zum Beschichten wurde ein mit der grenzflächenaktiven Zubereitung getränkter Flächenstreicher aus Filz verwendet. Nach dem ersten Auftragsvorgang durch Überstreichen der Metalloberfläche wurde das beschichtete Blech 1,5 bis 2 Minuten bei 60 °C vorgetrocknet. Danach wurde mit einem zweiten, keine Emulsion enthaltenden Flächenstreicher die aufgebrachte Beschichtung nochmals überstrichen, wobei die Schichtdicke verringert und die Schicht insgesamt vergleichmäßigt wurde. Nach nochmaligem Trocknen, bei dem die Oberflächentemperatur an der beschichteten Seite des Blechs 150 °C nicht überstieg, wurde die beschichtete Seite des Blechs mit einer "Graphit"-Folie, Stärke 0,25 mm, Rohdichte 1,0 g/cm³, belegt. Sodann wurde das beschichtete und belegte Blech in eine heizbare Gesenkpresse überführt und dort bei einer Temperatur von 200 °C unter Anwendung eines Preßdrucks von 7 MPa 1 Stunde lang verpreßt. Der so erhaltene Schichtstoff war biegsam. Die auflaminierte "Graphit"-Folie ließ sich ohne Zerstörung von der metallischen Unterlage nicht mehr lösen (Biege-Schältest). Diese ausgezeichnete Haftung blieb auch nach Behandlung des Schichtstoffs mit organischen Lösungsmitteln, wie Äthylalkohol, Benzin, Trichloräthylen, heißem Toluol oder Tetrahydrofuran erhalten. Auch nach dem Aufheizen des Schichtstoffs auf 400 °C war die Haftfähigkeit unverändert.

### Beispiel 2:

Ein Nickelblech, Abmessungen 100 x 100 x 0,05 mm, wurde in der gleichen Weise wie unter Beispiel 1 beschrieben, mit folgender wässeriger Emulsion beschichtet: Mischung aus Emulsion Si-Finish WS60E der Fa. Wacker Chemie, München, Feststoffgehalt 30 Gew.-%, mit den wirksamen grenzflächenaktiven Substanzen Dimethyl-polysiloxan und Hydrogen-methyl-polysiloxan und einem Epoxidamin-Vernetzer der Fa. Wacker Chemie, München, Bezeichnung V 32, Zusatzmenge, bezogen auf die Polysiloxanemulsion 15 g/l. Das beschichtete Nickelblech wurde wie in Beispiel 1 beschrieben, mit einer 0,25 mm starken Graphitfolie, Rohdichte 1,1 g/cm³, belegt und die so erhaltene Lagenkombination in einer heizbaren Gesenkpresse bei 210 °C unter einem Preßdruck von 15 MPa 4 Stunden lang verpreßt. Die Haftfestigkeit der Folie auf dem Nickelblech und die Beanspruchbarkeit des Schichtstoffs entsprach dem in Beispiel 1 beschriebenen Schichtstoff.

### Beispiel 3:

Eine 500 x 500 x 1 mm große Blechtafel aus ferritischem Stahl wurde nach dem Reinigen der Oberflächen in eine wässerige Emulsion perfluorierter Kohlenwasserstoffe, Feststoffgehalt 30 Gew.-%, Produktbezeichnung Scotchgard FC 270, Bezugsquelle Fa. 3 M, getaucht. Nach dem Tauchen wurde die Platte durch einen beidseitig wirkenden Flüssigkeitsabstreifer, der mit Filzlippen bestückt war und danach 3 mal durch einen Durchschubofen, dessen Atmosphäre auf eine Temperatur von 90 °C eingestellt war, geführt. Nach jedem Durchgang durch den Ofen wurde die aufgetragene Schicht beidseitig mit Filzabstreifern egalisiert und weiter verringert. Nach dem 3. Durchgang lag eine weitgehend trockene Schicht vor. Auf die so vorbereitete Blechtafel wurde beidseitig und ganzflächig ein "Graphit"-Laminat mit einer Stärke von 1 mm und einer Rohdichte von 1,1 g/cm³ aufgelegt und die so erhaltene Schichtanordnung in einer heizbaren Gesenkpresse bei 180°C 3 Stunden lang unter einem Druck von 5 MPa verpreßt. Der danach erhaltene Schichtstoff wurde gemäß DE 32 44 595 mit einer nur in die Oberflächenzonen der "Graphit"-Lagen eindringenden Furanharzimprägnierung versehen. Dabei wurde der Schichtstoff einer Lösung aus Furfurylalkohol und Maleinsäureanhydrid und nach dem Imprägniervorgang Härtungstemperaturen von 200 °C ausgesetzt. Aus dem auf diese Weise erhaltenen oberflächenimprägnierten Schichtstoff hergestellte Flachdichtungen zeigten in Abreißtests keine Delaminierungen zwischen den "Graphit"-Lagen und dem Metallkern. Die Zerstörung geschah stets innerhalb der "Graphit"-Lagen. Unter Testbeanspruchungen mit hohen Schraubenvorspannungen wurde an den Dichtungen bis zur Belastungsgrenze des "Graphit"-Laminats kein Fließen von Teilen der "Graphit"-Lagen auf der Metallunterlage festgestellt. Nach dem Entlasten ließ sich die Dichtung leicht von den Flanschen lösen.

### Beispiel 4:

3 Aluminiumbleche mit den Abmessungen 500 x 500 x 0,05 mm wurden wie unter Beispiel 3 beschrieben, mit einer 30 Gew.-% Feststoff enthaltenden wässerigen Emulsion eines α - ω - Dihydroxi-(methyl-alkylamino)-dimethyl-polysiloxans, Lieferant, Wacker Chemie, München, Produktbezeichnung VP 1445, beidseitig beschichtet. Nach dem Antrocknen des grenzflächenaktiven Überzugs auf den Oberflächen der Bleche wurde aus drei der Aluminiumbleche und vier "Graphit"-Folien von 0,25 mm Stärke, einer Rohdichte von 1,0 g/cm³ sowie einem Flächenmaß von 500 x 500 mm ein Schichtstapel aus sich abwechselnden Lagen "Graphit"-Folie und Aluminiumblech hergestellt und dieser Stapel in einer heizbaren Gesenkpresse bei einer Temperatur von 210 °C, einem Preßdruck von 10 MPa und einer Preßzeit von 1 Stunde verpreßt. Der danach erhaltene Schichtkörper war steif. Aus ihm konnten mit üblichen Verarbeitungsverfahren wie Stanzen oder Schneiden ohne Delaminationen der Aluminium- und/oder der "Graphit"-Lagen Dichtungskörper hergestellt werden. Abreißtests zeigten wiederum, daß die Verbindung Aluminium/"Graphit" fester war als die innere Festigkeit der "Graphit"-Lagen.

### Beispiel 5:

Ein verzinktes Eisenblech, Abmessungen 500 x 500 x 0,2 mm, wurde wie in Beispiel 3 beschrieben, mit einer 40 Gew.-% Feststoff enthaltenden wässerigen Emulsion eines α - ω - Dihydroxi-dimethyl-polysiloxans, Produktbezeichnung CT 92E, Lieferant Wacker Chemie, München, beschichtet und die aufgetragene Schicht durch Abstreifen und Trocknen minimiert und egalisiert. Das so vorbereitete Blech wurde dann in eine kastenförmige Preßform gelegt und dort mit einer ca. 10 cm hohen Schicht aus expandiertem Graphit überschichtet. Der expandierte Graphit wurde sodann mit einem Druck von 1,0 MPa bei einer Temperatur von 150 °C auf eine Stärke von ca. 1 mm verdichtet und der Druck 30 Minuten lang gehalten, um eine unlösbare Verbindung zwischen dem vorverdichteten "Graphit" und dem Zink zu erreichen. Auf die so vorverdichtete "Graphit"-Lage wurde dann eine 2. "Graphit"-Lage, Rohdichte 0,5 g/cm³, Stärke ca. 3 mm, gelegt. Danach wurde unter Aufrechterhaltung der Temperatur von 150°C 5 Minuten lang unter einem Preßdruck von 6 MPa endverpreßt. Dabei wurde eine stoffschlüssige, feste Verbindung zwischen den "Graphit"-Lagen hergestellt und eine von der Zinkschicht ohne Zerstörung nicht ablösbare Graphitauflage von 1,7 mm Stärke und einer Rohdichte von 1,0 g/cm³ geschaffen.

### Beispiel 6:

Nach dem gleichen Verfahren wie in Beispiel 3 beschrieben, wurde eine Kupferplatte, 500 x 500 x 0,1 mm, mit einem perfluorierten Kohlenwasserstoff unter Verwendung einer wässerigen Emulsion mit 30 Gew.-% Feststoffanteil, Produktbezeichnung Oleophobol C + S, Lieferant Chemische Fabrik Pfersee, D-8901 Langweid/Lech, beschichtet. Auf die beschichtete Kupferplatte wurde einseitig eine Lage "Graphit", Rohdichte 1,1 g/cm³, Dicke 2 mm, aufgelegt und die Anordnung bei einer Temperatur von 190 °C mit einem Preßdruck von 7,5 MPa 1 Stunde lang verpreßt. Auch bei diesem Schichtstoff konnte die Graphit"-Lage nicht mehr ohne Zerstörung entfernt werden.

### Beispiel 7:

Ein Eisenblech der Abmessungen 100 x 100 x 0,05 mm wurde in eine Lösung von 100 g Kaliumstearat und 150 g Chrom (III)acetat in 5 l Wasser getaucht und die nach dem Ablaufen der Lösung verbleibende, anhaftende Lösung mit einem mit der Lösung befeuchteten Filztuch auf der Oberfläche verrieben. Das behandelte Blech wurde bei 50 °C 2 Minuten in einem Trockenschrank vorgetrocknet, sodann mit einem nicht befeuchteten Filztuch überstrichen und mit einer "Graphit"-Folie, Dicke 0,5 mm, Rohdichte 1,1 g/cm³, belegt. Danach wurden die übereinanderliegenden Lagen bei einer Temperatur von 190 °C mit einem Druck von 20 MPa 6 Stunden lang in einer Gesenkpresse zusammengepreßt. Nach dem Ausbau aus der Presse ließ sich die "Graphit"-Folie ohne Zerstörung weder durch Abschälen noch durch Abreißen von der Blechoberfläche entfernen.

### Bestimmung der Dicke des Auftrags an grenzflächenaktiver Substanz:

Die Schichtdicke der grenzflächenaktiven Substanzen auf den in den Beispielen 1 bis 7 bezeichneten metallischen Unterlagen wurde durch Wägung von entsprechenden, jeweils gleichbehandelten Probeblechen oder -Platten mit einer Ausdehnung von 100 x 100 mm, die bei 110°C getrocknet worden waren, erstens im unbeschichteten und zweitens im beschichteten Zustand, Ermittlung der Menge an grenzflächenaktiver Substanz pro cm² beschichteter Fläche und Umrechnung dieses Wertes mit Hilfe der Dichte der grenzflächenaktiven Substanz auf die Schichtstärke bestimmt. Für die beschriebenen Ausführungsbeispiele wurden Schichtstärken zwischen 200 und 500 nm ermittelt.

## Patentansprüche

1. Verfahren zur Herstellung eines aus mindestens einer Lage eines Metalls und aus mindestens einer Lage eines durch Verpressen von expandiertem Graphit hergestellten Graphits bestehenden Schichtstoffs, bei dem eine ganzflächige, unlösbare Verbindung zwischen dem Metall und dem Graphit vorliegt,
dadurch gekennzeichnet, daß
mindestens eine der zu verbindenden Oberflächen mit mindestens einer grenzflächenaktiven Substanz aus der Gruppe siliciumorganische Verbindungen, perfluorierte Verbindungen, Metallseifen in einer solchen Weise benetzt wird, daß die für die Herstellung der Verbindung zwischen dem Metall und dem Graphit zur Verfügung stehende Schicht an grenzflächenaktiver Substanz eine Dicke von nicht weniger als 10 nm und nicht mehr als 1000 nm hat, die zu verbindenden Flächen sodann miteinander in Kontakt gebracht und bei einer Temperatur von minimal 30 und maximal 400 °C und einem Preßdruck von minimal 1 und maximal 200 MPa miteinander verbunden werden.

2. Verfahren zur Herstellung eines aus mindestens einer Lage eines Metalls und aus mindestens einer Lage eines durch Verpressen von expandiertem Graphit hergestellten Graphits bestehenden Schichtstoffs, bei dem eine ganzflächige, unlösbare Verbindung zwischen dem Metall und dem Graphit vorliegt,
dadurch gekennzeichnet, daß
mindestens eine der zu verbindenden Oberflächen mit mindestens einer grenzflächenaktiven Substanz aus der Gruppe siliciumorganische Verbindungen, perfluorierte Verbindungen, Seifen der Metalle Natrium, Kalium, Magnesium, Calcium benetzt wird und in diese grenzflächenaktiven Substanzen vor oder nach dem Benetzen der Oberflächen mit diesen, mindestens ein hydrolysierbares Salz aus der Gruppe der Metalle Aluminium, Zirkon, Titan, Zinn, Zink, Chrom in molekularer Form eingelagert wird, wobei die Benetzung mit der mindestens einen grenzflächenaktiven Substanz so durchgeführt wird, daß die für die Herstellung der Verbindung zwischen dem Metall und dem Graphit zur Verfügung stehende Schicht an grenzflächenaktiver Substanz inklusive des mindestens einen hydrolysierbaren Salzes aus der vorgenannten Gruppe von Metallen eine Dicke von nicht weniger als 10 nm und nicht mehr als 1000 nm hat, die zu verbindenden Flächen sodann miteinander in Kontakt gebracht und bei einer Temperatur von mindestens 30 und höchstens 400 °C und einem Anpreßdruck von mindestens einem und höchstens 200 MPa miteinander verbunden werden.

3. Verfahren nach Patentanspruch 1 oder Patentanspruch 2,
dadurch gekennzeichnet, daß
für die Metallage ein Metall aus der Gruppe Eisen, Stahl, Edelstahl, Kupfer, Nickel, Titan, Aluminium, Zink und Legierungen des Kupfers, Aluminiums, Zinks verwendet wird/werden.

4. Verfahren nach Patentanspruch 1 oder Patentanspruch 2 und nach Patentanspruch 3,
dadurch gekennzeichnet, daß
die Graphitlage auf eine Seite der Metallplatte aufgebracht wird.

5. Verfahren nach Patentanspruch 1 oder 2 und nach Patentanspruch 3,
dadurch gekennzeichnet, daß
auf beide Flachseiten der Metallplatte eine Graphitlage aufgebracht wird.

6. Verfahren nach Patentanspruch 1 oder 2 und nach Patentanspruch 3,
dadurch gekennzeichnet, daß
aus mehr als zwei alternierenden Lagen Metall und Graphit ein Schichtstoff hergestellt wird.

7. Verfahren nach Patentanspruch 6,
dadurch gekennzeichnet, daß
ein Schichtstoff hergestellt wird, bei dem die obere und die untere begrenzende Lage aus Graphit besteht.

8. Verfahren nach Patentanspruch 6,
dadurch gekennzeichnet, daß
ein Schichtstoff hergestellt wird, bei dem die obere und die untere begrenzende Lage aus Metall besteht.

9. Verfahren nach einem der Patentansprüche 1 bis 8,
dadurch gekennzeichnet, daß
als oberflächenaktive Substanz ein Polysiloxan verwendet wird.

10. Verfahren nach einem der Patentansprüche 1 bis 9,
dadurch gekennzeichnet, daß
als grenzflächenaktive Substanz ein Polysiloxan aus der Gruppe Dimethyl-polysiloxan, Methyl-hydrogen-polysiloxan, (Methyl-polyalkylenoxid)-dimethyl-polysiloxan, Amino-modifiziertes Methyl-polysiloxan, α - ω - Dihydroxi-dimethyl-polysiloxan, α - ω - Divinyl-dimethyl-polysiloxan, α - ω - Dihydroxi-(methyl-alkyl-amino)-dimethyl-polysiloxan verwendet wird.

11. Verfahren nach einem der Patentansprüche 1 bis 8,
dadurch gekennzeichnet, daß
als grenzflächenaktive Substanz eine Verbindung aus der Gruppe der perfluorierten Kohlenwasserstoffe der allgemeinen Formel CF₃-(CF₂)ₙ-R verwendet wird, wobei R ein Polyurethan, ein Polyacrylat- oder ein Poly-methacrylatrest und n eine Zahl zwischen 6 und 12 ist.

12. Verfahren nach einem der Patentansprüche 1 bis 11,
dadurch gekennzeichnet, daß
Mischungen der genannten grenzflächenaktiven Substanzen verwendet werden.

13. Verfahren nach einem der Patentansprüche 1 bis 12,
dadurch gekennzeichnet, daß
die grenzflächenaktive Substanz, oder deren Zubereitung in Form einer wässerigen Emulsion aufgetragen wird.

14. Verfahren nach einem der Patentansprüche 1 bis 10 sowie 12 und 13,
dadurch gekennzeichent, daß
als grenzflächenaktive Substanz eine wässerige Emulsion aus einem Methyl-hydrogen-polysiloxan und einem Dimethyl-polysiloxan verwendet wird.

15. Verfahren nach einem der Patentansprüche 2 bis 14,
dadurch gekennzeichnet, daß
den grenzflächenaktiven Substanzen Vernetzer aus der Gruppe Fettsäuresalze der Metalle Aluminium, Zirkonium, Titan, Zinn, Zink, Chrom und Epoxidamin zugesetzt werden.

16. Verfahren nach einem der Patentansprüche 1 bis 15,
dadurch gekennzeichnet, daß
die grenzflächenaktive Substanz mit einer Schichtdicke von 100 bis 500 nm aufgebracht wird.

17. Verfahren nach einem der Patentansprüche 1 bis 16,
dadurch gekennzeichnet, daß
zum Aufbringen auf die Metalloberfläche eine Lage aus Graphit mit einer Rohdichte von 0,01 bis 1,8 g/cm³ vorgesehen wird.

18. Verfahren nach einem der Patentansprüche 1 bis 16,
dadurch gekennzeichnet, daß
die zum Aufbringen auf die Metalloberfläche vorgesehene Lage aus Graphit eine Rohdichte von 0,5 bis 1,2 g/cm³ hat.

19. Verfahren nach einem der Patentansprüche 1 bis 16,
dadurch gekennzeichnet, daß
die Metalloberfläche mit der grenzflächenaktiven Substanz überzogen und die Graphitlage durch Verdichten von wurmförmigem Graphit auf der Metallage erzeugt wird.

20. Verfahren nach einem der Patentansprüche 1 bis 19,
dadurch gekennzeichnet, daß
die Dicke der Graphitlage 0,1 bis 10 mm beträgt.

21. Verfahren nach einem der Patentansprüche 1 bis 19,
dadurch gekennzeichnet, daß
die Dicke der Graphitlage 0,2 bis 2 mm beträgt.

22. Verfahren nach einem der Ansprüche 1 bis 21,
dadurch gekennzeichnet, daß
ein Anpreßdruck im Bereich von 1 bis 50 MPa verwendet wird.

23. Verfahren nach einem der Patentansprüche 1 bis 21,
dadurch gekennzeichnet, daß
ein Anpreßdruck im Bereich von 3 bis 10 MPa verwendet wird.

24. Verfahren nach einem der Patentansprüche 1 bis 23,
dadurch gekennzeichnet, daß
beim Pressen der Lagen eine Temperatur im Bereich von 80 bis 300°C verwendet wird.

25. Verfahren nach einem der Patentansprüche 1 bis 23,
dadurch gekennzeichnet, daß
beim Pressen der Lagen eine Temperatur im Bereich von 120 bis 200 °C verwendet wird.

26. Verfahren nach einem der Patentansprüche 1 bis 25,
dadurch gekennzeichnet, daß
zum Zusammenpressen der Lagen aus Metall und Graphit eine Preßzeit von 5 Minuten bis 5 Stunden verwendet wird.

27. Verfahren nach einem der Patentansprüche 1 bis 25,
dadurch gekennzeichnet, daß
zum Zusammenpressen der Lagen aus Metall und Graphit eine Preßzeit von einer Stunde bis zwei Stunden verwendet wird.

## Claims

1. A process for the preparation of a laminate consisting of at least one layer of a metal and at least one layer of graphite produced by pressing expanded graphite, in which a non-detachable bond is present over the whole surface between the metal and the graphite,
characterised in that
at least one of the surfaces to be bonded is wetted with at least one contact surface-active substance from the group of organosilicon compounds, perfluorinated compounds, metal soaps in such way that the layer of contact surface active substance available for the production of the bond between the metal and the graphite has a thickness of not less than 10 nm and not more than 1000 nm, the surfaces to be connected then being brought into contact with one another and connected with one another at a temperature of 30°C minimum and 400°C maximum and a pressure of 1 MPa minimum and 200 MPa maximum.

2. A process for the preparation of a laminate consisting of at least one layer of a metal and at least one layer of graphite produced by pressing expanded graphite, in which a non-detachable bond is present over the whole surface between the metal and the graphite,
characterised in that
at least one of the surfaces to be bonded is wetted with at least one contact surface-active substance from the group of organosilicon compounds, perfluorinated compounds, soaps of the metals sodium, potassium, magnesium, calcium and, before or after wetting of the surfaces with these, at least one hydrolysable salt from the group of metals aluminium, zirconium, titanium, tin, zinc, chromium in molecular form is incorporated into these contact surface active substances, with the wetting with the at least one contact surface active substance being carried out that the layer of contact surface active substance available for the production of the connection between the metal and the graphite and inclusive of the at least one hydrolysable salt from the aforementioned group of metals has a thickness of not less than 10 nm and not more than 1000 nm, the surfaces to be connected being then brought into contact with one another and being connected at a temperature of at least 30°C and at most 400°C and a pressure of at least 1 MP and at most 200 MPa.

3. A process according to claim 1 or claim 2,
characterised in that
a metal from the group of iron, steel, high-grade steel, copper, nickel, titanium, aluminium, zinc and of alloys of copper, aluminium, zinc is/are used as the metal layer.

4. A process according to claim 1 or claim 2 and according to claim 3,
characterised in that
the graphite layer is applied to one face of the metal plate.

5. A process according to claim 1 or claim 2 and according to claim 3,
characterised in that
a graphite layer is applied to both the flat sides of the metal plate.

6. A process according to claim 1 or claim 2 and according to claim 3,
characterised in that
a laminate is prepared from more than two alternating layers of metal and graphite.

7. A process according to claim 6,
characterised in that
a laminate is prepared wherein the upper and lower boundary layers consist of graphite.

8. A process according to claim 6,
characterised in that
a laminate is prepared wherein the upper and lower boundary layers consist of metal.

9. A process according to one of claims 1 to 8,
characterised in that
a polysiloxane is used as contact surface-active substance.

10. A process according to one of claims 1 to 9,
characterised in that
a polysiloxane from the group dimethylpolysiloxane, methylhydrogenpolysiloxane, (methylpolyalkylene oxide)dimethylpolysiloxane, amino-modified methylpolysiloxane, α,ω-dihydroxydimethylpolysiloxane, α,ω-divinyldimethylpolysiloxane, α,ω-dihydroxy(methyl alkylamino)dimethylpolysiloxane is used as contact surface-active agent.

11. A process according to one of claims 1 to 8,
characterised in that
a compound from the group of perfluorinated hydrocarbons of the general formula CF₃-(CF₂)ₙ-R, wherein R is a polyurethane, a polyacrylate or polymethacrylate ligand and n is a number between 6 and 12, is used as contact surface-active substance.

12. A process according to one of claims 1 to 11,
characterised in that
mixtures of the aforesaid surface-active substances are used.

13. A process according to one of claims 1 to 12,
characterised in that
the surface-active substance or preparation is applied in the form of an aqueous emulsion.

14. A process according to one of claims 1 to 10 and 12 and 13,
characterised in that
an aqueous emulsion of a methylhydrogen-polysiloxane and a dimethylpolysiloxane is used as surface-active agent.

15. A process according to one of claims 2 to 14,
characterised in that
cross-linking agents from the group of fatty acid salts of the metals aluminium, zirconium, titanium, tin, zinc, chromium, and epoxyamine are added to the surface-active substances.

16. A process according to one of claims 1 to 15,
characterised in that
the surface-active substance is applied in a layer thickness of from 100 to 500 nm.

17. A process according to one of claims 1 to 16,
characterised in that
the graphite layer provided for application to the surface of the metal has a bulk density of from 0.01 to 1.8 g/cm³.

18. A process according to one of claims 1 to 16,
characterised in that
the graphite layer provided for application to the surface of the metal has a bulk density of from 0.5 to 1.2 g/cm³.

19. A process according to one of claims 1 to 16,
characterised in that
the metal surface is coated with the contact surface-active substance and the graphite layer is produced by compression of vermicular graphite on the metal layer.

20. A process according to one of claims 1 to 19,
characterised in that
the thickness of the graphite layer is from 0.1 to 10 mm.

21. A process according to one of claims 1 to 19,
characterised in that
the thickness of the graphite layer is from 0.2 to 2 mm.

22. A process according to one of claims 1 to 21,
characterised in that
the applied pressure used is within the range of from 1 to 50 MPa.

23. A process according to one of claims 1 to 21,
characterised in that
the applied pressure used is within the range of from 3 to 10 MPa.

24. A process according to one of claims 1 to 23,
characterised in that
a temperature within the range of from 80 to 300°C is used when pressing the layers.

25. A process according to one of claims 1 to 23,
characterised in that
a temperature within the range of from 120 to 200°C is used when pressing the layers.

26. A process according to one of claims 1 to 25,
characterised in that
a pressing time of from 5 minutes to 5 hours is used for pressing together the layers of metal and graphite.

27. A process according to one of claims 1 to 25,
characterised in that
a pressing time of from one hour to two hours is used for pressing together the layers of metal and graphite.

## Revendications

1. Procédé de fabrication d'un produit stratifié composé d'au moins une couche d'un métal et d'au moins une couche d'un graphite produit par compression de graphite expansé, dans lequel existe une liaison à surface entière indétachable entre le métal et le graphite,
caractérisé en ce que
au moins une des surfaces à assembler avec au moins une substance tensioactive du groupe des composés organiques du silicium, composés perfluorés, savons métalliques, est humidifiée d'une manière telle que la couche de substance tensioactive se trouvant à disposition pour la fabrication du composé entre le métal et le graphite a une épaisseur non inférieure à 10 nm et non supérieure à 1000 nm, les surfaces à lier sont alors amenées en contact ensemble et sont assemblées à une température minima de 30 et maxima de 400°C et une pression de compression minima de 1 et maxima de 200 MPa.

2. Procédé de fabrication d'un produit stratifié composé au moins d'une couche d'un métal et d'au moins une couche d'un graphite produit par compression de graphite expansé, dans lequel existe une liaison à surface entière, non détachable entre le métal et le graphite,
caractérisé en ce que
au moins une des surfaces à assembler est humidifiée avec au moins une substance tensioactive du groupe des composés organiques du silicium, composés perfluorés, savons des métaux sodium, potassium, magnésium, calcium et dans ces substances tensioactives avant ou après l'humidification des surfaces est introduit avec celles-ci, au moins un sel hydrolysable du groupe des métaux aluminium, zircone, titane, étain, zinc, chrome sous forme moléculaire, le mouillage avec au moins l'une des substances tensioactives étant réalisé de manière que la couche de substance radio-active se trouvant à disposition pour la fabrication de la liaison entre le métal et le graphite et incluant au moins l'un des sels hydrolysables du groupe de métaux précités, a une épaisseur non inférieure à 10 nm et non supérieure à 1000 nm, les surfaces à assembler sont alors mises en contact ensemble et sont assemblées à une température d'au moins 30 et d'au maximum 400°C et à une pression de compression d'au minimum un et d'au maximum 200 MPa.

3. Procédé selon la revendication 1 ou la revendication 2
caractérisé en ce que
pour la couche métallique est ou sont utilisés un métal du groupe fer, acier, acier spécial, cuivre, nickel, titane, aluminium, zinc et des alliages du cuivre, de l'aluminium, du zinc.

4. Procédé selon la revendication 1 ou la revendication 2, et selon la revendication 3,
caractérisé en ce que
la couche de graphite est appliquée sur un côté de la plaque métallique.

5. Procédé selon la revendication 1 ou 2 et selon la revendication 3,
caractérisé en ce que
des deux côtés plans de la plaque métallique est appliquée une couche de graphite.

6. Procédé selon la revendication 1 ou 2 et selon la revendication 3,
caractérisé en ce que
un produit stratifié est fabriqué avec plus de deux couches de métal et de graphite alternées.

7. Procédé selon la revendication 6,
caractérisé en ce que
on fabrique un produit statifié dans lequel la couche supérieure et la couche inférieure limite se composent de graphite.

8. Procédé selon la revendication 6,
caractérisé en ce que
on fabrique un produit stratifié, dans lequel la couche supérieure et la couche inférieure limite se composent de métal.

9. Procédé selon une des revendications 1 à 8,
caractérisé en ce que
comme substance tensioactive on utilise un polysiloxane.

10. Procédé selon une des revendications 1 à 9,
caractérisé en ce que
comme substance tensioactive on utilise un polysiloxane du groupe des diméthyl-polysiloxanes, méthyl-hydrogène-polysiloxanes, (méthyl-polyalkylénoxyde)-diméthyl-polysilo-xanes, méthyl-polysiloxanes modifiés amino, α - ω - dihydroxy-diméthyl-polysiloxanes, α - ω - divinyl-diméthyl-polysiloxane, α - ω - dihydroxy-(méthyl-alkylamino)-diméthyl-polysiloxanes).

11. Procédé selon une des revendications 1 à 8,
caractérisé en ce que
comme substance tensioactive on utilise un composé du groupe des hydrocarbures perfluorés de la formule générale CF₃-(CF₂)ₙ-R, dans laquelle R est un polyuréthanne, un radical polyacrylate ou un radical polyméthacrylate et n est nombre entre 6 et 12.

12. Procédé selon une des revendications 1 à 11,
caractérisé en ce que
on utilise des mélanges des substances tensioactives citées.

13. Procédé selon une des revendications 1 à 12,
caractérisé en ce que
la substance tensioactive ou sa préparation est appliquée sous forme d'une émulsion aqueuse.

14. Procédé selon une des revendications 1 à 10, ainsi que 12 et 13,
caractérisé en ce que
comme substance tensioactive on utilise une émulsion aqueuse d'un méthyl-hydrogène-polysiloxane et d'un polysiloxane diméthylique.

15. Procédé selon une des revendications 2 à 14,
caractérisé en ce que
aux substances tensioactives sont ajoutés des réticuleurs du groupe des sels d'acide gras des métaux aluminium, zirconium, titane, étain, zinc, chrome, et amine époxy.

16. Procédé selon une des revendications 1 à 15,
caractérisé en ce que
la substance tensioactive est appliquée avec une épaisseur de couche de 100 à 500 nm.

17. Procédé selon une des revendications 1 à 16,
caractérisé en ce que
pour l'application sur la surface métallique est prévue une couche de graphite ayant une masse volumique apparente de 0,01 à 1,8 g/cm³.

18. Procédé selon une des revendications 1 à 16,
caractérisé en ce que
la couche de graphite prévue pour l'application sur la surface métallique a une masse volumique apparente de 0,5 à 1,2 g/cm³.

19. Procédé selon une des revendications 1 à 16,
caractérisé en ce que
la surface métallique est revêtue d'une substance tensioactive et la couche de graphite est produite par compactage de graphite sous forme vermiculaire sur la couche de métal.

20. Procédé selon une des revendications 1 à 19,
caractérisé en ce que
l'épaisseur de la couche de graphite atteint 0,1 à 10 mm.

21. Procédé selon une des revendications 1 à 19,
caractérisé en ce que
l'épaisseur de la couche de graphite se monte à 0,2 jusqu'à 2 mm.

22. Procédé selon une des revendications 1 à 21,
caractérisé en ce que
on utilise une pression de compression dans la zone de 1 à 50 MPa.

23. Procédé selon une des revendications 1 à 21,
caractérisé en ce que
on utilise une pression de compression dans la zone de 3 à 10 MPa.

24. Procédé selon une des revendications 1 à 23,
caractérisé en ce que
lors du pressage des couches on utilise une température dans la zone de 80 à 300°C.

25. Procédé selon une des revendications 1 à 23,
caractérisé en ce que
lors du pressage des couches on utilise une température dans la zone de 120 à 200°C.

26. Procédé selon une des revendications 1 à 25,
caractérisé en ce que
pour la compression des couches de métal et de graphite on utilise un temps de pressage de 5 minutes à 5 heures.

27. Procédé selon une des revendications 1 à 25,
caractérisé en ce que
pour la compression des couches de métal et de graphite on utilise un temps de pressage d'une heure à deux heures.
